# NEUE EUROPÄISCHE PATENTSCHRIFT

(11) **EP 3 592 552 B2**
(45) Veröffentlichungstag und Bekanntmachung des Hinweises auf die Entscheidung über den Einspruch: **26.08.2026**
(45) Hinweis auf die Patenterteilung: 08.12.2021
(21) Anmeldenummer: 18701159.8
(22) Anmeldetag: 22.01.2018
(51) Int. Cl.: B32B 7/12, B32B 27/06, B32B 27/30, B32B 27/32, B32B 27/40, B32B 5/18, B32B 5/24, B32B 27/12

(54) **RÜCKSTELLFÄHIGE POLYOLEFIN-SCHAUMLAMINATE**
RECOVERABLE POLIOLEFIN-FOAM LAMINATE
STRATIFIÉ MOUSSE-POLYOLÉFINE À REPRISE

(30) Priorität: 10.03.2017 DE 102017203967
(43) Veröffentlichungstag der Anmeldung: 15.01.2020
(73) Patentinhaber: Benecke-Kaliko AG, 30419 Hannover (DE)
(72) Erfinder: MANI, Joseph, 73054 Eislingen (DE); HÜLSEWEDE, Volker, 73326 Deggingen (DE); WEBER, Daniel, 73035 Göppingen (DE)
(74) Vertreter: Held, Stephan
(86) Internationale Anmeldenummer: PCT/EP2018/051372
(87) Internationale Veröffentlichungsnummer: WO 2018/162135

(56) Entgegenhaltungen:
- EP-A1- 0 394 839
- EP-A1- 1 647 384
- EP-A2- 0 429 020
- WO-A1-2007/029924
- WO-A1-2011/039298
- WO-A1-2011/039298
- DE-A1- 102005 050 524
- DE-A1- 19 840 203
- JP-A- 2000 072 911
- JP-A- 2000 072 911
- JP-A- 2000 355 085
- JP-A- 2000 355 085
- JP-A- 2003 334 880
- ISO 527-3
- ISO 3386-1
- Acta Chim. Slov. 2018, 65, 344–353
- Yves Vordermann et al., Kunststoffe 9/2013
- HR Shercliff et al. "Elastic Structures in Design"
- MF Ashby "Materials Selection In Mechanical Design"
- Elsevier 2016: MF Ashby "Materials Selection In MechanicalDesign",’ ISBN 0 7506 4357 9

## Beschreibung

Die Erfindung betrifft ein Kunststofffolienlaminat, einen daraus gebildeten Formkörper und vorteilhafte Verwendungen des Kunststofffolienlaminats, insbesondere für Verkleidungen von Fahrzeuginnenräumen.

Kunststofffolienlaminate, die aus einer kompakten polyolefinbasierten Oberfolie und einem geschäumten ebenfalls polyolefinbasierten Polymermaterial bestehen, werden als Schaumlaminatkonstruktionen verwendet. Das geschäumte Polymermaterial hat üblicherweise eine Dichte von 35 bis 120 g/l. Derartige Konstruktionen werden häufig im Automobil-Innenraum auf Instrumententafeln und Türverkleidungen verwendet.

Durch die geringe Dichte der geschäumten Schicht sinkt das Gewicht der Bauteile sowie der für die Herstellung notwendige Rohmaterialbedarf. Ein weiterer Vorteil einer geringen Dichte ist, dass die geschäumte Schicht elastisch auf Druckbelastung reagiert, wodurch eine angenehme Druckhaptik der Bauteile erhalten wird. Eine angenehme Druckhaptik wird von Herstellern und Verbrauchern zunehmend geschätzt und ist ein entsprechend wichtiges Qualitätsmerkmal.

Insbesondere bei Verwendung im Bereich von Türbrüstungen kommt es aber bei solchen weichen Kunststofffolienlaminaten durch länger anhaltende Belastungen, z.B. durch das Auflegen eines Ellenbogens, zur Bildung einer Delle. Aufgrund mangelnden Rückstellverhaltens bleibt diese Delle für eine längere Dauer sichtbar. Diese Delle wird sowohl von dem Erstausrüster bzw. OEM als auch den Endkunden als störend wahrgenommen. Von immer mehr Herstellern werden daher Produkte gefordert, die eine angenehme Eindruckhaptik aufweisen und gleichzeitig keine Dellenbildung zeigen.

JP2003334880A offenbart ein Laminat für Kraftfahrzeuge umfassend eine Oberfolie und eine Schaumschicht, wobei die Schaumschicht eine Stauchhärte gemäß JISK-6767 bei 25% Stauchung von 40 bis 80 kPa aufweist.

Die Aufgabe der vorliegenden Erfindung besteht darin, die vorstehend beschriebenen Nachteile des Standes der Technik zu überwinden. Insbesondere bestand die Aufgabe der vorliegenden Erfindung in der Bereitstellung eines Kunststofffolienlaminats, das auch bei Belastung nicht zur Dellenbildung bzw. nicht zur Bildung länger verbleibender Dellen neigt und sich gleichzeitig durch eine angenehme Eindruckhaptik auszeichnet. Dabei soll das Kunststofffolienlaminat mit den üblichen Verfahren wie Extrusion, Negativ-Tiefziehen (IMG Verfahren), Positiv-Tiefziehen und Kaschierung zu verarbeiten sein. Bauteile auf Basis dieses Kunststofffolienlaminats sollen ferner einen niedrigen Glanz ermög-lichen und vielfältig modifizierbar sein.

Die Aufgabe der Erfindung konnte durch ein Kunststofffolienlaminat gemäß Anspruch 1 gelöst werden.

Die erfindungsgemäßen Kunststofffolienlaminate zeigen eine angenehme Eindruckhaptik und überraschenderweise gleichzeitig keine Dellenbildung oder eine relativ rasche weitgehende Rückbildung von gebildeten Dellen, d.h. sie zeigen insbesondere ein gutes Rückstellvermögen.

Die Kunststofffolienlaminate sind tiefziehfähig. Außerdem kann das Kunststofffolienlaminat sowohl im IMG Verfahren als auch im Positiv-Tiefziehverfahren verarbeitet werden. Die Bauteile auf Basis der neuen Kunststofffolienlaminate zeigen einen niedrigen Glanz, was als höherwertig betrachtet wird. Sie eignen sich daher insbesondere für die Fahrzeuginnenverkleidung.

Im Folgenden wird die Erfindung im Einzelnen erläutert.

Der Elastizitätsmodul bzw. der Elastizitätsmodul gemäß ISO 527-3, wie in dieser Anmeldung verwendet, wird bestimmt gemäß DIN EN ISO 527-3 vom Juli 2003, Verfahren: Probekörper Typ 5, Geschwindigkeit 500 mm/min. Der Elastizitätsmodul bezieht sich auf den Elastizitätsmodul in Längsrichtung.

Die Stauchhärte bzw. die Stauchhärte gemäß ISO 3386-1, wie in dieser Anmeldung verwendet, wird bestimmt gemäß DIN EN ISO 3386-1 vom Oktober 2015, Verfahren: gemessen im ersten Zyklus bei einer Stauchung von 25 % zur Ausgangsdicke des Schaumes.

Die Zugspannung bei 100 % Dehnung, wie in dieser Anmeldung verwendet, wird bestimmt gemäß DIN EN ISO 527-3 vom Juli 2003 nach dem vorstehend für den Elastizitätsmodul angegebenen Verfahren.

Der Schmelzindex MFI (190 °C, 2,16 kg) bzw. (230 °C, 2,16 kg), wie in dieser Anmeldung verwendet, wird bestimmt gemäß DIN EN ISO 1133; 2005.06.

Der Biegemodul, wie in dieser Anmeldung verwendet, wird bestimmt gemäß DIN EN ISO 178; 2013.09.

Das Kunststofffolienlaminat umfasst eine ein- oder mehrlagige Oberfolie und eine Schaumschicht. Die Oberfolie wird als Oberfolie bezeichnet, da sie bei typischen Anwendungen die obere bzw. die von außen sichtbare Oberfläche darstellt. In diesem Sinne wird im Kunststofffolienlaminat die Seite der Oberfolie als oben bzw. obere Seite und die Seite mit der Schaumschicht als unten bzw. untere Seite verstanden. Im Folgenden beziehen sich Angaben zu relativen Anordnungen auf diese Bezugsrichtung, sofern nicht anders angegeben.

Die Oberfolie kann aus einer oder mehreren Lagen bestehen, zum Beispiel aus einer, zwei, drei oder mehr Lagen. Es kann sich somit um eine einzelne Folie oder um einen Verbund von zwei, drei oder mehr Folien handeln. Solche ein- oder mehrlagigen Folien sind in der Technik üblich. Die Oberfolie ist bevorzugt einlagig oder zweilagig.

Bei einer einlagigen Oberfolie weist die Oberfolie einen Elastizitätsmodul gemäß ISO 527-3 von 150 N/mm² bis 600 N/mm² auf.

Bei einer mehrlagigen Oberfolie, bevorzugt einer zweilagigen Oberfolie, weist eine Lage dieser Oberfolie einen Elastizitätsmodul gemäß ISO 527-3 von 150 N/mm² bis 600 N/mm² auf. Die Lage der Oberfolie mit einem Elastizitätsmodul gemäß ISO 527-3 von 150 N/mm² bis 600 N/mm² ist dabei bevorzugt nicht die oberste Lage der mehrlagigen Oberfolie, sondern eine Teillage zwischen der obersten Lage der Oberfolie und der Schaumschicht, besonders bevorzugt die unterste Lage, d.h. die Lage der Oberfolie, die der Schaumschicht am nächsten liegt. Bei einer zweilagigen Oberfolie gibt es naturgemäß nur eine obere oder äußere und eine innere Lage. Bei einer mehrlagigen Oberfolie, bevorzugt einer zweilagigen Oberfolie, weist somit die oberste Lage der Oberfolie bevorzugt einen Elastizitätsmodul gemäß ISO 527-3 von unter 150 N/mm² auf.

Erfindungsgemäß weist die Oberfolie, sofern es sich um eine einlagige Oberfolie handelt, oder eine Lage der Oberfolie, sofern es sich um Oberfolie mit zwei oder mehr Lagen handelt, einen Elastizitätsmodul gemäß ISO 527-3 von 150 bis 600 N/mm², bevorzugter von 200 bis 400 N/mm², auf, wobei der Elastizitätsmodul der Oberfolie oder einer Lage der Oberfolie bevorzugt größer als 150 N/mm² ist.

Erfindungsgemäß weist die Schaumschicht des Kunststofffolienlaminats eine Stauchhärte gemäß ISO 3386-1 von 30 bis 300 kPa, bevorzugt von 30 bis 200 kPa, bevorzugter von 50 bis 160 kPa, besonders bevorzugt von 60 bis 100 kPa, auf.

Folien mit einem Elastizitätsmodul von 150 N/mm² bis 600 N/mm² sind im Handel ohne weiteres erhältlich. Auch Schaumstoffe mit einer Stauchhärte von 30 bis 300 kPa, die als Schaumschichten geeignet sind, sind kommerziell erhältlich.

Für eine angenehme Eindruckhaptik ist zunächst ein entsprechend weicher Schaum erforderlich. Bevorzugt ist ein Schaum, insbesondere ein

Polyolefinschaum, mit einer Stauchhärte von nicht mehr als 200 kPa. Schäume, insbesondere Polyolefinschäume, mit Stauchhärten von nicht mehr als 100 kPa bzw. < 100 kPa weisen eine Weichheit auf, die dafür besonders geeignet ist. Polyolefinschäume mit einer Stauchhärte > 200 kPa sind so hart, dass keine weiche, aber für viele Anwendungen noch akzeptable Eindruckhaptik vorhanden ist.

Es wurde festgestellt, dass die Oberfolie die Dellenbildung ebenfalls beeinflusst. Oberfolien, die einen hohen Elastizitätsmodul aufweisen bzw. die eine Lage mit hohem Elastizitätsmodul aufweisen, tragen zur Vermeidung einer Dellenbildung bei. Überschreitet dieser Elastizitätsmodul einen Wert von 150 N/mm², zeigt das Schaumlaminat keine Dellenbildung mehr. Diese konnte nach einer OEM spezifischen Prüfmethode geprüft werden, die nachstehend in den Beispielen erläutert wird.

Die Oberfolie, sofern es sich um eine einlagige Oberfolie handelt, oder die Lage der Oberfolie mit einem Elastizitätsmodul von 150 N/mm² bis 600 N/mm², sofern es sich um eine Oberfolie mit zwei oder mehr Lagen handelt, weist ferner bevorzugt eine Zugspannung bei 100 % Dehnung von größer 30 N auf, was ebenfalls zur Vermeidung einer Dellenbildung beiträgt. Die Zugspannung ist abhängig von der Dicke der Folie.

Die Oberfolie ist bevorzugt eine kompakte Folie, insbesondere die einlagige Oberfolie. Sofern die Oberfolie mehrlagig ist, ist bevorzugt mindestens eine Lage eine kompakte Folie, wobei die anderen Lagen kompakt oder geschäumt sein können. Als Oberfolie ist daher auch ein Verbund aus einer kompakten und einer geschäumten Folie denkbar, wobei in der Regel die kompakte Folie einen Elastizitätsmodul von 150 N/mm² bis 600 N/mm² aufweist. Bei einer mehrlagigen Oberfolie sind aber ebenfalls bevorzugt alle Lagen kompakt. Eine kompakte Folie weist in der Regel eine Dichte von mindestens 0,86 g/cm³ auf. Die erfindungsgemäß verwendete Oberfolie weist bevorzugt eine Dichte im Bereich von 0,88 bis 0,91 g/cm³ auf.

Die Oberfolie ist insbesondere eine Kunststofffolie. Die einlagige Oberfolie oder, sofern es sich um eine Oberfolie mit zwei oder mehr Lagen handelt, die Lage der Oberfolie mit einem Elastizitätsmodul gemäß ISO 527-3 von 150 N/mm² bis 600 N/mm², ist bevorzugt eine Polyolefin-Folie, eine Polyvinylchlorid-Folie oder eine Polyurethan-Folie, wobei eine Polyolefin-Folie bevorzugt ist. Entscheidender ist aber der Elastizitätsmodul bzw. die Festigkeit der Oberfolie und nicht die Art der eingesetzten Polymere.

In einer bevorzugten Ausführungsform umfasst die Oberfolie oder die Lage der Oberfolie mit einem Elastizitätsmodul gemäß ISO 527-3 von 150 N/mm² bis 600 N/mm² 50 bis 80 Gew.-% Ethylen-basiertes Polymer und 20 bis 50 Gew.-% Propylen-basiertes Polymer, bezogen auf das Gewicht der Oberfolie bzw. der Teillage der Oberfolie.

Bei dem Ethylen-basierten Polymer kann es sich um ein oder mehrere Ethylen-Homopolymere und/oder ein oder mehrere Ethylen-Copolymere handeln. Ethylen-basierte Polymere weisen einen Gewichtsanteil an Ethylen von größer als 50% auf. Bei dem Propylen-basierten Polymer kann es sich um ein oder mehrere Propylen-Homopolymere und/oder ein oder mehrere Propylen-Copolymere handeln. Propylen-basierte Polymere weisen einen Gewichtsanteil an Propylen von größer als 50% auf.

Als Ethylen-basierte Polymere können z.B. Ethylen-basierte Copolymere und / oder Ethylen-Propylen-Copolymeren (PEP) und / oder Ethylen-Propylen-Kautschuk (EPR), EPM-Kautschuk (Ethylen-Propylen-Kautschuk), EPDM-Kautschuk (Ethylen-Propylen-Dien-Kautschuk) und / oder Polyethylene verwendet werden. Bevorzugt sind Ethylen-basierte Copolymere mit alpha-Olefinen mit 4 oder mehr C-Atomen, bevorzugt mit 4 bis 8 C-Atomen, wie z.B. Ethylen-Buten-Copolymere oder Ethylen-Octen-Copolymere.

Als Propylen-basierten Polymere können alle handelsüblichen Polymere eingesetzt werden, wie z.B. homo-PP (Polypropylen-Homopolymer) oder Polypropylen-Copolymere, insbesondere mit Ethylen, wie z.B. r-PP (Polypropylen-Random-Copolymere), auch als PP-Random bezeichnet, oder b-PP (Polypropylen-Block-Copolymere).

Bevorzugt ist in der Oberfolie oder der Lage der Oberfolie mit einem Elastizitätsmodul von 150 N/mm² bis 600 N/mm² ein Propylen-basiertes Polymer mit einem Elastizitätsmodul gemäß ISO 527-3 von größer oder gleich 300 N/mm² und/oder einer Dichte von mindestens 0,890 g/cm³, bevorzugter mindestens 0,895 g/cm³ und noch mehr bevorzugt mindestens 0,900 g/cm³ enthalten.

Das Ethylen-basierten Polymer und/oder das Propylen-basierte Polymer, die in der Oberfolie oder in der Lage der Oberfolie mit einem Elastizitätsmodul von 150 N/mm² bis 600 N/mm² verwendet werden, weisen bevorzugt folgende Eigenschaften auf: Das Ethylen-basierten Polymer besitzt bevorzugt einen Elastizitätsmodul gemäß ISO 527-3 von größer oder gleich 1 N/mm², eine Dichte von mindestens 0,85 g/cm³ und einen Schmelzindex MFI (190 °C, 2,16 kg) gemäß ISO 1133 von 0,01 bis 10 g/10 min, bevorzugt 0,5 bis 10 g/10 min, und/oder das Polypropylen-basierte Polymer weist einen Elastizitätsmodul gemäß ISO 527-3 von größer oder gleich 300 N/mm², eine Dichte von 0,89 bis 0,92 g/cm³ und einen Schmelzindex MFI gemäß ISO 1133 (230 °C, 2,16 kg) von 0,01 bis 10 g/10 min auf.

In einer bevorzugten Ausführungsform enthält die Oberfolie oder die Lage der Oberfolie mit einem Elastizitätsmodul gemäß ISO 527-3 von 150 N/mm² bis 600 N/mm² zusätzlich mindestens einen Phasenvermittler, insbesondere bei Verwendung von homo-PP als Propylen-basiertem Polymer. Dieser kann eine makroskopische Entmischung von Ethylen-basierten und Propylen-basierten Polymeren verhindern. Geeignete Phasenvermittler sind insbesondere Ethylen-Propylen-Copolymere, wie z.B. PP-Random und / oder PE-PP-Copolymer. Ein geeigneter Phasenvermittler in dieser Erfindung ist beispielsweise ein Propylen-Copolymer, insbesondere ein Propylen-Ethylen-Copolymer, mit einem Biegemodul von größer 4 MPa und einem Schmelzindex MFI gemäß ISO 1133 (230 °C, 2,16 kg) von 0,01 bis 10 g/10 min.

Die Oberfolie oder die Lage der Oberfolie mit einem Elastizitätsmodul gemäß ISO 527-3 von 150 N/mm² bis 600 N/mm² kann gegebenenfalls Additive enthalten, wobei es sich um auf diesem Gebiet übliche Additive handeln kann.

Beispiele sind Vernetzungshilfsmittel, Antioxidationsmittel, Lichtschutzmittel, insbesondere UV-Lichtschutzmittel, Pigmente, wie z.B. Ruß, Gleitmittel und/oder Alterungsschutzmittel.

In einer bevorzugten Ausführungsform ist die Oberfolie einlagig. Bei mehrlagigen Kunststofffolienlaminaten enthält die Oberfolie neben der vorstehend erörterten Lage mit einem Elastizitätsmodul gemäß ISO-527-3 von 150 N/mm² bis 600 N/mm² eine, zwei oder mehr weitere Lagen. Diese Lagen können jeweils ein Elastizitätsmodul von unter 150 N/mm² oder von mindestens 150 N/mm² aufweisen, wobei aber die Lage bzw. Lagen bevorzugt einen Elastizitätsmodul von unter 150 N/mm², bevorzugter unter 100 N/mm² aufweisen.

Für zusätzliche Lagen mit einem Elastizitätsmodul von mindestens 150 N/mm² gilt das vorstehend gesagte, d.h. bei mehrlagigen Oberfolien können mehr als eine Lage mit einem Elastizitätsmodul von mindestens 150 N/mm² mit unterschiedlicher Zusammensetzung vorhanden sein.

Bevorzugt weist aber die eine oder die mehren zusätzlichen Lagen einen Elastizitätsmodul von unter 150 N/mm², bevorzugter unter 100 N/mm² auf. Dies gilt insbesondere für die oberste Lage. Die zusätzlichen Lagen mit einem Elastizitätsmodul von unter 150 N/mm² sind Kunststofffolien, die ebenfalls im Handel erhalten werden können. Bevorzugt sind Polyolefin-Folien bzw. -Lagen mit einem Elastizitätsmodul von unter 150 N/mm², bevorzugter unter 100 N/mm², die bevorzugt ein oder mehrere Ethylen-basierte Polymere und gegebenenfalls ein oder mehrere Propylen-basierte Polymere umfassen. Geeignete Folien können durch geeignete Auswahl von Typen und Mengen an weichen Polymeren, also solchen mit einem relativ niedrigen Elastizitätsmodul, und gegebenenfalls harten Polymeren erhalten werden. Der Fachmann ist damit vertraut. Auch diese weicheren Lagen können gegebenenfalls übliche Additive enthalten. Beispiele wurden vorstehend genannt.

Eine weiter bevorzugte Ausführungsform ist eine mehrlagige, vorzugsweise zweilagigen Oberfolie, wobei die oder eine untere Lage der Oberfolie, also die oder eine Lage, die zwischen der Schaumschicht und der oberen Lage der Oberfolie liegt, einen Elastizitätsmodul von 150 bis 600 N/mm² und bevorzugt von 200 bis 400 N/mm² aufweist, und die obere Lage der Oberfolie einen Elastizitätsmodul kleiner 150 N/mm², bevorzugt kleiner 100 N/mm² und besonders bevorzugt kleiner 50 N/mm² aufweist.

Eine solche mehrlagige, bevorzugt zweilagige Oberfolie weist den zusätzlichen Vorteil auf, dass die Oberschicht der Oberfolie eine sehr hohe Weichheit und dementsprechend eine angenehme horizontale Haptik mitbringt und die Unterschicht der Oberfolie als Schutz gegen die Dellenbildung aufgrund ihrer hohen Steifigkeit wirkt.

Das Kunststofffolienlaminat umfasst ferner eine Schaumschicht mit einer Stauchhärte gemäß ISO 3386-1 von 30 bis 300 kPa. Bevorzugte Bereiche für die Stauchhärte wurden bereits vorstehend angeführt. Geeignete Kunststoff-Schaumstoffmaterialien für die Schaumschicht sind bekannt und im Handel erhältlich oder können von dem Fachmann ohne weiteres hergestellt werden. Beispielhaft wird auf die DE 10 2005 050 524 A1, in denen die Herstellung entsprechender Kunststoff-Schaummaterialien bzw. Kunststoff-Schaumschichten auf Basis von Polyolefinen beschrieben wird, und den darin zitierten Stand der Technik verwiesen.

Die erfindungsgemäß verwendete Schaumschicht ist bevorzugt aus einem Polyolefin-Schaumstoff, der bevorzugt aus mindestens einem Ethylen-basierten Polymer und/oder mindestens einem Propylen-basierten Polymeren gebildet wird. Beispiele für solche Polymere wurden vorstehend genannt.

Die erfindungsgemäß verwendete Schaumschicht, vorzugsweise eine Polyolefin-Schaumschicht, weist bevorzugt eine Dichte von 40 bis 200 kg/m³, bevorzugter von 67 bis 83 kg/m³, auf.

Die Dicken der erfindungsgemäß verwendeten Oberfolie und Schaumschicht können in den üblichen Bereichen variieren. Die Oberfolie weist z.B. eine Dicke von 0,2 bis 1,5 mm, bevorzugt von 0,5 bis 0,8 mm, auf. Die Schaumschicht weist z.B. eine Dicke von 1,0 bis 6,0 mm, bevorzugt von 1,5 bis 3,0 mm, auf.

In einer bevorzugten Ausführungsform sind die Oberfolie und die Schaumschicht direkt miteinander verbunden. Die Oberfolie kann nach üblichen Verfahren mit der Schaumschicht verbunden werden. Bevorzugt wird die Oberfolie thermisch oder mittels Kleber auf der Schaumfolie kaschiert.

In einer weiteren bevorzugten Ausführungsform umfasst das Kunststofffolienlaminat ferner ein textiles Flächengebilde, das zwischen der Oberfolie und der Schaumschicht angeordnet ist. Auch in diesem Fall können Oberfolie, textiles Flächengebilde und Schaumschicht z.B. thermisch oder mittels eines Klebers verbunden werden. Bei den textilen Flächengebilden kann es sich z.B. um Polyester-basierte Textilien oder Baumwoll-basierte Textilien handeln. Diese Ausführungsformen eignen sich z.B. als Kunstleder für den Automobil-, Sport- oder Modebereich, wenn die Oberfolie mit einer Oberflächenstrukturierung oder Prägung versehen wird. Die Oberfolie kann vor der Laminierung mit einer weiteren kompakten, textilen oder geschäumten Schicht laminiert werden.

Die Oberfolie kann üblicherweise mit einem Lack, insbesondere einem Polyurethan-Lack, ausgerüstet sein. Diese Lackausrüstung wird typischerweise vor der Laminierung mit der Schaumschicht auf die Oberfolie aufgebracht. Die Oberfolie kann ferner bevorzugt mit einer Oberflächenstrukturierung bzw. Narbung versehen sein.

Das Kunststofffolienlaminat kann auf eine Trägerstruktur, z.B. aus ABS (Acrylnitril-Butadien-Styrol-Copolymere) oder Naturfasern, aufgebracht werden, insbesondere wenn das Laminat für einen Formkörper verwendet wird. Das Kunststofffolienlaminat und die Trägerstruktur können mit einem Kleber verbunden werden. Das Kunststofflaminat wird mit der Seite der Schaumschicht auf die Trägerstruktur aufgebracht, so dass die Oberfolie die obere sichtbare Oberfläche bildet.

Das erfindungsgemäße Kunststofffolienlaminat ist überraschenderweise rückstellfähig. Hierunter wird insbesondere verstanden, dass bei dem nachstehend im Beispielteil erläuterten Dellenprüfung-Messverfahren die Dellentiefe 24 Stunden nach Entlastung nicht größer als 0,1 mm ist bzw. die Delle nicht mehr sichtbar ist.

Die vorliegende Erfindung umfasst auch einen Formkörper, der das erfindungsgemäße Kunststofffolienlaminat wie vorstehend beschrieben umfasst. In der Regel umfasst der Formkörper auch eine Trägerstruktur, auf die das Kunststofffolienlaminat aufgebracht ist wie vorstehend beschrieben. Vorteilhafterweise weist bei diesen Formkörpern die Oberfolie eine genarbte Oberfläche auf.

Das erfindungsgemäße Kunststofffolienlaminat kann im Positiv-Tiefziehverfahren oder im IMG-Verfahren verarbeitet werden, wobei das Kunststofffolienlaminat als Folie eingesetzt wird. Bei diesen Verfahren kann die Oberfolie mit einer Narbung versehen werden. Die Erfindung betrifft daher auch ein Verfahren zur Herstellung eines Formkörpers umfassend das erfindungsgemäße Kunststofffolienlaminat, wobei die Formgebung des Kunststofffolienlaminats durch ein IMG-Verfahren oder ein Positiv-Tiefziehverfahren durchgeführt wird. Das Kunststofffolienlaminat wird dabei in der Regel während oder nach der Formgebung auf eine Trägerstruktur aufgebracht. Bei dem IMG-Verfahren und Positiv-Tiefziehverfahren handelt es sich um im Stand der Technik bekannte Verfahren.

Beim IMG-Verfahren (InMoldGraining-Verfahren) erfolgt im Vergleich zum herkömmlichen Kaschierprozess, bei dem eine genarbte Folie auf eine Trägerstruktur mittels Vakuum aufkaschiert wird, der Narbauftrag unmittelbar vor dem Kaschierprozess. Dies erfolgt durch eine Form, die bereits die Narbstruktur enthält und diese Struktur auf die heiße Folie übergibt. Diese genarbte Folie wird in diesem vorgeformten Zustand direkt auf die Trägerstruktur appliziert. Beim Positiv-Tiefziehverfahren wird die Folie bereits beim Kaschieren mit einer Narbung, d.h. durch einen vorhergehenden Prägevorgang mit einer dreidimensionalen Oberflächenstruktur, versehen.

Diese Narbung darf durch das Strecken der Folie beim Tiefziehprozess nur so verändert werden, dass die Optik des finalen Bauteils den Anforderungen des Kunden entspricht. Um diese Stabilität zu erreichen, ist es bekannt, die Folie vor dem Tiefziehen durch Elektronenstrahlen zu vernetzen. Der Vernetzungsprozess kann durch Zugabe von Vernetzungshilfsmittel unterstützt werden.

Beim IMG-Verfahren wird das Kunststofffolienlaminat bevorzugt bei einer Temperatur größer 160°C verformt und genarbt. Es wird ein Formkörper bzw. Bauteil aus Kunststofffolienlaminat und der Trägerstruktur erhalten.

Beim Positiv-Tiefziehverfahren, das bevorzugt wenigstens einen, die Narbstruktur auf der Oberfolie bildenden Prägeschritt und eine anschließende Vernetzung umfasst, wird ebenfalls ein Formkörper bzw. Bauteil aus Kunststofffolienlaminat und der Trägerstruktur erhalten. Es ist bevorzugt, dass die Oberfolie nach dem, die Narbstruktur bildenden Prägeschritt und der Vernetzung einen Gelgehalt von 10-80 Gew.-%, gemessen nach 24-stündiger Extraktion in siedendem Xylol, aufweist.

Eine sich an den Prägeschritt anschließende weitergehende Vernetzung der Oberfolie ist für eine hohe Narbfestigkeit beim Tiefziehen und/oder Verformen vorteilhaft. Die Vernetzung kann chemisch oder physikalisch erfolgen, wobei eine Vernetzung mittels Elektronenstrahlen bevorzugt ist.

Die erfindungsgemäßen Kunststofffolienlaminate eignen sich z.B. als Kunstleder, z.B. im Fahrzeugbereich, insbesondere im Automobilbereich, im Sportbereich oder im Modebereich. Die erfindungsgemäßen Kunststofffolienlaminate und Formkörper eignen sich insbesondere für die Verwendung als Innenverkleidung von Fahrzeugen, insbesondere für die Innenverkleidung eines Kraftfahrzeugs, insbesondere für Türinnenverkleidungen und die Verkleidung von Instrumententafeln.

Die Erfindung wird nachfolgend anhand von Beispielen näher erläutert:

### Beispiele

Es wurden 4 Kunststofffolienlaminate hergestellt (Vergleichsbeispiele 1 und 2 und erfindungsgemäße Beispiele 1 und 2). Die Kunststofffolienlaminate bestehen jeweils aus einer einlagigen kompakten 0,5 mm dicken Oberfolie und einer 3 mm dicken Schaumschicht aus einem geschäumtem Polymermaterial (polyolefinbasierte Schaumschicht, Dichte 67 kg/m³). Die Oberfolie ist mit einem Polyurethan-Lack ausgerüstet. Oberfolie und Schaumschicht wurden thermisch kaschiert. Die hergestellten 4 Kunststofffolienlaminate unterscheiden sich in der Zusammensetzung der Oberfolie, die in Tabelle 1 gezeigt ist.

Das Extrusionsverhalten der Oberfolie wurde geprüft. Ferner wurden die Kunststofffolienlaminate einer Narbung im Tiefziehverfahren unterworfen. Desweiteren wurde die Dellenbildung bei den Kunststofffolienlaminaten gemäß dem nachstehend beschriebenen Dellenprüfung-Messverfahren untersucht. Die Ergebnisse hierzu sind ebenfalls in Tabelle 1 gezeigt. In der Tabelle 1 sind außerdem die Werte zum Elastizitätsmodul und der Zugspannung der jeweiligen Oberfolien und zur Stauchhärte der Schaumschicht wiedergegeben.

**Tabelle 1: Oberfolien-Zusammensetzungen und Ergebnisse**

| Substanz | Vergleichsbeispiel 1 | Vergleichsbeispiel 2 | Beispiel 1 | Beispiel 2 |
|---|---|---|---|---|
| TPE-V Blend | 65 | | | |
| PE 1 | 35 | | | |
| PE 2 | | 35 | 60 | |
| PE 3 | | | | 60 |
| TPO 1 | | 60 | | |
| PP 1 | | | 35 | 35 |
| PP 2 | | 5 | 5 | 5 |
| UV-Lichtschutzmittel | 0,2 | 0,2 | 0,2 | 0,2 |
| Ruß-Masterbatch | 2 | 2 | 2 | 2 |
| Extrusionsverhalten | i.O. | i.O. | i.O. | i.O. |
| Tiefziehen | prägnante Narbe, kein Aufglänzen | prägnante Narbe, kein Aufglänzen | prägnante Narbe, kein Aufglänzen | prägnante Narbe, kein Aufglänzen |
| Tvor = 170°C | | | | |
| Trück = 180°C | | | | |
| Elastizitätsmodul in Längsrichtung [N/mm²] | 50 | 140 | 250 | 400 |
| Zugspannung bei 100% Dehnung [N] ; Dicke 0,5 mm | 13 | 24 | 33 | 41 |
| Dellenbildung am Schaumlaminat (Stauchhärte der Schaumes 80 kPa bei einer Dicke von 3,00 mm) | 0,35 mm und sichtbar | 0,30 mm und sichtbar | 0,05 mm und nicht sichtbar | 0,01 mm und nicht sichtbar |
| Substanz | Vergleichsbeispiel 1 | Vergleichsbeispiel 2 | Beispiel 1 | Beispiel 2 |
| i.O. = in Ordnung | | | | |

Die in der Tabelle angeführten Rezepturbestandteile bedeuten:

| | |
|---|---|
| TPE-V Blend: | Thermoplastisches Elastomer bestehend aus 35 Gew.-% PP (Polypropylen) und 65 Gew.-% EPDM (Ethylen-Propylen-Dien-Kautschuk): MFI 15 g/10 min (230 °C, 10 kg), Gelgehalt 28%; |
| PE 1: | Ethylen-Octen Copolymer: Dichte 0,857 g/cm³, MFI 1 g/10 min (190 °C, 2,16 kg); |
| PE 2: | Ethylen-Buten Copolymer: Dichte 0,870 g/cm³, MFI 0,5 g/10 min (190 °C, 2,16 kg); |
| PE 3: | Ethylen-Octen Copolymer: Dichte 0,902 g/cm³, MFI 1 g/10 min (190 °C, 2,16 kg); |
| TPO 1: | Thermoplastisches Elastomer (unvernetzt) bestehend aus 35% h-Polypropylen und 65 % eines Copolymers aus Ethylen und Propylen: Dichte 0,89 g/cm³, MFI 1 g/10 min (230 °C, 2,16 kg); |
| PP 1: | homo-PP (Polypropylen-Homopolymer): Dichte 0,905 g/cm³, Biegemodul 1200 MPa, MFI = 2,6 g/10 min bei 230 °C, 2,16 kg, Schmelzpunkt 164 °C; |
| PP 2: | r-PP (Polypropylen Random-Copolymer): Dichte 0,895 g/cm³, Biegemodul 800 MPa, MFI < 0,5 g/10 min bei 230 °C, 2,16 kg, Schmelzpunkt 143 °C; |
| Lichtschutzmittel | Benzotriazol-Derivat |

### Messprinzip der Dellenprüfung

Bei dieser Messmethode wird eine Probe mit 30 N Druck bzw. mit einem 3 kg schwerem, zylinderförmigem Gewicht über einen Zeitraum von 4 Stunden belastet. Die Spitze des Zylinders ist kugelförmig mit einem Radius von 2 cm abgerundet.

So wird eine Delle erzeugt, und ihr anschließend 24 Stunden Zeit zum Zurückstellen gegeben.

### Messgröße

Gemessen wird die Ausgangsdicke, die Dicke direkt nach der Belastung und die Dicke nach der 24 stündigen Entlastungsphase. Die Differenz aus Ausgangsdicke und der Dicke nach der 24 stündigen Entlastungsphase gibt die Dellentiefe an. Sie darf für ein Bestehen der Prüfung beim Kunden nicht größer als 0,1 Millimeter sein bzw. unsichtbar sein.

## Patentansprüche

1. Kunststofffolienlaminat, umfassend eine ein- oder mehrlagige Oberfolie und eine Schaumschicht, **dadurch gekennzeichnet, dass** die Oberfolie oder eine Lage der Oberfolie einen Elastizitätsmodul gemäß ISO 527-3 von 150 N/mm² bis 600 N/mm² aufweist und die Schaumschicht eine Stauchhärte gemäß ISO 3386-1 vom Oktober 2015 von 30 bis 300 kPa aufweist, Verfahren: gemessen im ersten Zyklus bei einer Stauchung von 25 % zur Ausgangsdicke des Schaumes.

2. Kunststofffolienlaminat nach Anspruch 1, **dadurch gekennzeichnet, dass** die Oberfolie oder die eine Lage der Oberfolie mit einem Elastizitätsmodul von 150 N/mm² bis 600 N/mm² eine Polyolefin-Folie, eine Polyvinylchlorid-Folie oder eine Polyurethan-Folie ist.

3. Kunststofffolienlaminat nach Anspruch 1 oder Anspruch 2, **dadurch gekennzeichnet, dass** die Oberfolie oder die Lage der Oberfolie mit einem Elastizitätsmodul von 150 N/mm² bis 600 N/mm² 50 bis 80 Gew.-% Ethylen-basiertes Polymer und 20 bis 50 Gew.-% Propylen-basiertes Polymer, bezogen auf das Gewicht der Oberfolie bzw. der Lage der Oberfolie, umfasst.

4. Kunststofffolienlaminat nach Anspruch 3, **dadurch gekennzeichnet, dass** das Ethylen-basierte Polymer einen Elastizitätsmodul gemäß ISO 527-3 von größer oder gleich 1 N/mm², eine Dichte von mindestens 0,85 g/cm³ und einen Schmelzindex MFI gemäß ISO 1133 (190 °C, 2,16 kg) von 0,01 bis 10 g/10 min aufweist, und/oder das Propylen-basierte Polymer einen Elastizitätsmodul gemäß ISO 527-3 von größer oder gleich 300 N/mm², eine Dichte von 0,89 bis 0,92 g/cm³ und einen Schmelzindex MFI gemäß ISO 1133 (230 °C, 2,16 kg) von 0,01 bis 10 g/10 min aufweist.

5. Kunststofffolienlaminat nach Anspruch 3 oder 4, **dadurch gekennzeichnet, dass** das Propylen-basierte Polymer eine Dichte von mindestens 0,890 g/cm³ aufweist.

6. Kunststofffolienlaminat nach irgendeinem der Ansprüche 1 bis 5, **dadurch gekennzeichnet, dass** die Oberfolie oder die Lage der Oberfolie mit einem Elastizitätsmodul von 150 N/mm² bis 600 N/mm² ferner mindestens einen Phasenvermittler enthält, wobei der Phasenvermittler bevorzugt ein Propylen-Copolymer ist, wobei das Propylen-Copolymer bevorzugt ein Biegemodul von größer oder gleich 4 MPa und einen Schmelzindex MFI gemäß ISO 1133 (230 °C, 2,16 kg) von 0,01 bis 10 g/10 min aufweist.

7. Kunststofffolienlaminat nach irgendeinem der Ansprüche 1 bis 6, **dadurch gekennzeichnet, dass** die Oberfolie oder die Lage der Oberfolie mit einem Elastizitätsmodul von 150 N/mm² bis 600 N/mm² einen Elastizitätsmodul von 200 bis 400 N/mm² aufweist.

8. Kunststofffolienlaminat nach irgendeinem der Ansprüche 1 bis 7, **dadurch gekennzeichnet, dass** die Schaumschicht eine Stauchhärte gemäß ISO 3386-1 von 30 bis 200 kPa, bevorzugt 50 bis 160 kPa, bevorzugter 60 bis 100 kPa, aufweist.

9. Kunststofffolienlaminat nach irgendeinem der Ansprüche 1 bis 8, **dadurch gekennzeichnet, dass** die Schaumschicht eine Polyolefin-Schaumschicht ist, die bevorzugt eine Dichte von 40 bis 200 kg/m³, bevorzugter 67 bis 83 kg/m³, aufweist.

10. Kunststofffolienlaminat nach einem der Ansprüche 1 bis 9, **dadurch gekennzeichnet, dass** die Oberfolie mehrlagig ausgebildet ist, vorzugsweise zweilagig, wobei die obere Lage der Oberfolie einen Elastizitätsmodul gemäß ISO 527-3 von kleiner 150 N/mm², bevorzugt kleiner 100 N/mm², bevorzugter kleiner 50 N/mm², aufweist und eine darunterliegende Lage der Oberfolie, vorzugsweise die unterste Lage, einen Elastizitätsmodul gemäß ISO 527-3 von 150 bis 600 N/mm², bevorzugter 200 bis 400 N/mm² aufweist.

11. Kunststofffolienlaminat nach irgendeinem der Ansprüche 1 bis 10, **dadurch gekennzeichnet, dass** die Oberfolie eine Schichtdicke von 0,2 bis 1,5 mm, bevorzugt von 0,5 bis 0,8 mm, aufweist und/oder die Schaumschicht eine Schichtdicke von 1 bis 6 mm, bevorzugt 1,5 bis 3,0 mm, aufweist.

12. Kunststofffolienlaminat nach irgendeinem der Ansprüche 1 bis 11, **dadurch gekennzeichnet, dass** die Oberfolie thermisch oder durch einen Kleber auf der Schaumschicht kaschiert ist.

13. Kunststofffolienlaminat nach irgendeinem der Ansprüche 1 bis 12, **dadurch gekennzeichnet, dass** das Kunststofffolienlaminat ferner ein textiles Flächengebilde umfasst, das zwischen der Oberfolie und der Schaumschicht angeordnet ist, und/oder das Kunststofffolienlaminat auf einer Trägerstruktur aufgebracht ist.

14. Formkörper, umfassend das Kunststofffolienlaminat nach irgendeinem der Ansprüche 1 bis 13, wobei der Formkörper bevorzugt die Innenverkleidung eines Kraftfahrzeuges ist.

## Claims

1. Plastics film laminate, comprising a single- or multiple-ply upper film and a foam layer, **characterized in that** the upper film or a ply of the upper film has a modulus of elasticity in accordance with ISO 527-3 of 150 N/mm² to 600 N/mm², and the foam layer has a compressive hardness in accordance with ISO 3386-1 of October 2015, of 30 to 300 kPa, method: measured in the first cycle at a compression of 25% in relation to the initial thickness of the foam.

2. Plastics film laminate according to Claim 1, **characterized in that** the upper film or the one of the plies of the upper film with a modulus of elasticity of 150 N/mm² to 600 N/mm² is a polyolefin film, a polyvinyl chloride film or a polyurethane film.

3. Plastics film laminate according to Claim 1 or Claim 2, **characterized in that** the upper film or the ply of the upper film with a modulus of elasticity of 150 N/mm² to 600 N/mm² comprises 50 to 80% by weight of ethylene-based polymer and 20 to 50% by weight of propylene-based polymer, based on the weight of the upper film and, respectively, of the ply of the upper film.

4. Plastics film laminate according to Claim 3, **characterized in that** the ethylene-based polymer has a modulus of elasticity in accordance with ISO 527- 3 that is greater than or equal to 1 N/mm², a density of at least 0.85 g/cm³ and a melt index MFI in accordance with ISO 1133 (190°C, 2.16 kg) of 0.01 to 10 g/10 min, and/or the propylene-based polymer has a modulus of elasticity in accordance with ISO 527-3 that is greater than or equal to 300 N/mm², a density of 0.89 to 0.92 g/cm³ and a melt index MFI in accordance with ISO 1133 (230°C, 2.16 kg) of 0.01 to 10 g/10 min.

5. Plastics film laminate according to Claim 3 or 4, **characterized in that** the propylene-based polymer has a density of at least 0.890 g/cm³.

6. Plastics film laminate according to any one of Claims 1 to 5, **characterized in that** the upper film or the ply of the upper film with a modulus of elasticity of 150 N/mm² to 600 N/mm² moreover comprises at least one compatibilizer, where the compatibilizer is preferably a propylene copolymer, where the propylene copolymer preferably has a flexural modulus that is greater than or equal to 4 MPa and a melt index MFI according to ISO 1133 (230°C, 2.16 kg) of 0.01 to 10 g/10 min.

7. Plastics film laminate according to any one of Claims 1 to 6, **characterized in that** the upper film or the ply of the upper film with a modulus of elasticity of 150 N/mm² to 600 N/mm² has a modulus of elasticity of 200 to 400 N/mm².

8. Plastics film laminate according to any one of Claims 1 to 7, **characterized in that** the foam layer has a compressive hardness according to ISO 3386-1 of 30 to 200 kPa, preferably 50 to 160 kPa, more preferably 60 to 100 kPa.

9. Plastics film laminate according to any of Claims 1 to 8, **characterized in that** the foam layer is a polyolefin foam layer which preferably has a density of 40 to 200 kg/m³, more preferably 67 to 83 kg/m³.

10. Plastics film laminate according to any of Claims 1 to 9, **characterized in that** the upper film is of multiple-ply, preferably two-ply, configuration, where the upper ply of the upper film has a modulus of elasticity in accordance with ISO 527-3 that is below 150 N/mm², preferably below 100 N/mm², more preferably below 50 N/mm², and an upper-film ply situated therebelow, preferably the undermost ply, has a modulus of elasticity in accordance with ISO 527-3 of 150 to 600 N/mm², more preferably 200 to 400 N/mm².

11. Plastics film laminate according to any one of Claims 1 to 10, **characterized in that** the upper film has a layer thickness of 0.2 to 1.5 mm, preferably of 0.5 to 0.8 mm, and/or the foam layer has a layer thickness of 1 to 6 mm, preferably 1.5 to 3.0 mm.

12. Plastics film laminate according to any one of Claims 1 to 11, **characterized in that** the upper film has been laminated thermally or via an adhesive on the foam layer.

13. Plastics film laminate according to any one of Claims 1 to 12, **characterized in that** the plastics film laminate moreover comprises a textile sheet arranged between the upper film and the foam layer, and/or the plastics film laminate has been applied on a supportive structure.

14. Moulding, comprising the plastics film laminate according to any one of Claims 1 to 13, where the moulding is preferably the internal cladding of a motor vehicle.

## Revendications

1. Stratifié de feuilles plastiques comprenant une feuille supérieure mono- ou multicouche et une couche de mousse, **caractérisé en ce que** la feuille supérieure ou une couche de la feuille supérieure présente un module d'élasticité selon ISO 527-3 de 150 N/mm² à 600 N/mm² et la couche de mousse présente une dureté par indentation selon ISO 3386-1 d'octobre 2015 de 30 à 300 kPa, procédé : mesuré au premier cycle à une compression de 25 % par rapport à l'épaisseur initiale de la mousse.

2. Stratifié de feuilles plastiques selon la revendication 1, **caractérisé en ce que** la feuille supérieure ou une couche de la feuille supérieure ayant un module d'élasticité de 150 N/mm² à 600 N/mm² est une feuille de polyoléfine, une feuille de polychlorure de vinyle ou une feuille de polyuréthane.

3. Stratifié de feuilles plastiques selon la revendication 1 ou la revendication 2, **caractérisé en ce que** la feuille supérieure ou la couche de la feuille supérieure ayant un module d'élasticité de 150 N/mm² à 600 N/mm² comprend 50 à 80 % en poids de polymère à base d'éthylène et 20 à 50 % en poids de polymère à base de propylène, par rapport au poids de la feuille supérieure ou à la couche de la feuille supérieure.

4. Stratifié de feuilles plastiques selon la revendication 3, **caractérisé en ce que** le polymère à base d'éthylène présente un module d'élasticité selon ISO 527-3 supérieur ou égal à 1 N/mm², une masse volumique d'au moins 0,85 g/cm³ et un indice de fluidité MFI selon ISO 1133 (190 °C, 2,16 kg) de 0,01 à 10 g/10 min, et/ou le polymère à base de propylène présente un module d'élasticité selon ISO 527-3 supérieur ou égal à 300 N/mm², une masse volumique de 0,89 à 0,92 g/cm³ et un indice de fluidité MFI selon ISO 1133 (230 °C, 2,16 kg) de 0,01 à 10 g/10 minutes.

5. Stratifié de feuilles plastiques selon la revendication 3 ou 4, **caractérisé en ce que** le polymère à base de propylène présente une masse volumique d'au moins 0 890 g/cm³.

6. Stratifié de feuilles plastiques selon l'une quelconque des revendications 1 à 5, **caractérisé en ce que** la feuille supérieure ou la couche de la feuille supérieure ayant un module d'élasticité de 150 N/mm² à 600 N/mm² contient en outre au moins un agent de compatibilisation, l'agent de compatibilisation étant de préférence un copolymère du propylène, le copolymère du propylène présentant de préférence un module d'élasticité en flexion supérieur ou égal à 4 MPa et un indice de fluidité MFI selon ISO 1133 (230 °C, 2,16 kg) de 0,01 à 10 g/10 minutes.

7. Stratifié de feuilles plastiques selon l'une quelconque des revendications 1 à 6, **caractérisé en ce que** la feuille supérieure ou la couche de la feuille supérieure ayant un module d'élasticité de 150 N/mm² à 600 N/mm² présente un module d'élasticité de 200 à 400 N/mm².

8. Stratifié de feuilles plastiques selon l'une quelconque des revendications 1 à 7, **caractérisé en ce que** la couche de mousse présente une dureté par indentation selon ISO 3386-1 de 30 à 200 kPa, de préférence de 50 à 160 kPa, plus préférentiellement de 60 à 100 kPa.

9. Stratifié de feuilles plastiques selon l'une quelconque des revendications 1 à 8, **caractérisé en ce que** la couche de mousse est une couche de mousse de polyoléfine qui présente de préférence une masse volumique de 40 à 200 kg/m³, plus préférentiellement de 67 à 83 kg/m³.

10. Stratifié de feuilles plastiques selon l'une quelconque des revendications 1 à 9, **caractérisé en ce que** la feuille supérieure a une structure multicouche, de préférence bicouche, la couche supérieure de la feuille supérieure présentant un module d'élasticité selon la norme ISO 527-3 inférieur à 150 N/mm², de préférence inférieur à 100 N/mm², plus préférentiellement inférieur à 50 N/mm², et une couche située en dessous de la feuille supérieure, de préférence la couche la plus inférieure, présentant un module d'élasticité selon ISO 527-3 de 150 à 600 N/mm², plus préférentiellement de 200 à 400 N/mm².

11. Stratifié de feuilles plastiques selon l'une quelconque des revendications 1 à 10, **caractérisé en ce que** la feuille supérieure présente une épaisseur de couche de 0,2 à 1,5 mm, de préférence de 0,5 à 0,8 mm, et/ou la couche de mousse présente une épaisseur de couche de 1 à 6 mm, de préférence de 1,5 à 3,0 mm.

12. Stratifié de feuilles plastiques selon l'une quelconque des revendications 1 à 11, **caractérisé en ce que** la feuille supérieure est contrecollée sur la couche de mousse de manière thermique ou à l'aide d'un adhésif.

13. Stratifié de feuilles plastiques selon l'une quelconque des revendications 1 à 12, **caractérisé en ce que** le stratifié de feuilles plastiques comprend en outre une structure textile bidimensionnelle, qui est disposée entre la feuille supérieure et la couche de mousse et/ou le stratifié de feuilles plastiques est appliqué sur une structure support.

14. Objet façonné, comprenant le stratifié de feuilles plastiques selon l'une quelconque des revendications 1 à 13, l'objet façonné étant de préférence la garniture intérieure d'un véhicule à moteur.
